# EUROPEAN PATENT SPECIFICATION

(11) **EP 3 344 593 B1**
(45) Date of publication and mention of the grant of the patent: **08.12.2021**
(21) Application number: 16843044.5
(22) Date of filing: 02.09.2016
(51) Int. Cl.: C04B 14/14, C04B 14/18, C09K 8/467, C04B 28/02

(54) **COMPOSITIONS AND METHODS FOR WELL CEMENTING**
ZUSAMMENSETZUNGEN UND VERFAHREN ZUR BOHRLOCHZEMENTIERUNG
COMPOSITIONS ET PROCÉDÉS DE CIMENTATION DE PUITS

(30) Priority: 04.09.2015 US 201562214239 P
(43) Date of publication of application: 11.07.2018
(73) Proprietor: Imerys Oilfield Minerals, Inc., Roswell, GA 30076 (US)
(72) Inventor: BOEHRINGER, Roberto, Denver, CO 80202 (US); FLOWERS, JR., James, R., Houston, TX 77070 (US); STEPHENSON, Cristopher, Houston, TX 77069 (US)
(74) Representative: Haseltine Lake Kempner LLP
(86) International application number: PCT/US2016/050047
(87) International publication number: WO 2017/040888

(56) References cited:
- US-A- 2 521 190
- US-A- 5 562 767
- US-A1- 2008 115 937
- US-A1- 2009 105 099
- US-A1- 2010 163 252
- US-A1- 2012 085 263
- US-A1- 2012 178 875
- US-A1- 2013 061 779
- ERDEM ET AL: "Use of perlite as a pozzolanic addition in producing blended cements", CEMENT AND CONCRETE COMPOS, ELSEVIER APPLIED SCIENCE, BARKING, GB, vol. 29, no. 1, 2 November 2006 (2006-11-02), pages 13-21, XP005846927, ISSN: 0958-9465, DOI: 10.1016/J.CEMCONCOMP.2006.07.018

## Description

### CLAIM FOR PRIORITY

This Application claims the benefit of priority of U.S Provisional Patent Application No. 62/214,239, filed September 4, 2015.

### FIELD OF THE DESCRIPTION

The present disclosure relates to compositions and methods for well cementing, and more particularly, to compositions and methods for well cementing including natural glass.

### Background

Wells for extracting fluid and gaseous natural resources from the earth often include a well bore lined with tubular metal casing through which the natural resources, such as oil and natural gas, will be extracted. For example, when the well bore is drilled, sections of the casing are lowered into the well bore creating an annular space between the casing and the well bore. Well cementing includes providing a cement sheath between the casing and the surrounding earth. Well cementing typically serves several important functions. For example, the hardened concrete resulting from well cementing helps support the vertical and radial loads applied to the casing, isolates porous formations of the surrounding earth from the producing zone formations, prevents undesired sub-surface fluids from escaping to the surface, and/or protects the casing from corrosion. Well cementing may also be used in a remedial manner, for example, to repair an existing well. US 2013/0061779 A1 relates to cementing operations, for example to methods and compositions that comprise unexpanded perlite with cement kiln dust, pumicite, or a combination thereof.

Certain characteristics may be desirable for well cement. For example, depending on the nature of the well, it may be desirable for the well cement to have the desired performance characteristics over a wide temperature range, such as, for example, from well below freezing to temperatures greater than 400 degrees Celsius in geothermal wells. In addition, the density of the well cement slurry may be important to achieve the desired hydrostatic pressure in the annulus. The fluid rheology of the well cement slurry may also be important to ensure that the slurry does not harden too quickly or too slowly during placement. The compressive strength is also important for ensuring that the well cement is strong enough to support the vertical and radial loads of the well. In addition, it may be desirable to provide extenders for the well cement to reduce the amount of hydraulic cement (e.g., Portland cement) or other components of the well cement, for example, to reduce costs and/or to substitute the extenders for other components of the well cement that may have insufficient availability.

Therefore, it may be desirable to provide well cement compositions and methods that provide one or more of the desired characteristics. The compositions and methods described herein may address at least some of the above-noted considerations.

### SUMMARY

The present invention is defined in and by the appended claims.

It is to be understood that both the foregoing general description and the following detailed description are exemplary and explanatory only and are not restrictive of the invention, as claimed.

### DESCRIPTION OF EXEMPLARY EMBODIMENTS

Reference will now be made in detail to exemplary embodiments.

A method for well cementing includes supplying a settable composition including a cement composition and water into a well bore, and allowing the settable composition to set to form hardened concrete. The cement composition includes a hydraulic cement and natural glass, and the hardened concrete has a strength activity index of at least 125%. The strength activity index is measured according to ASTM C311/C311M-13.

The natural glass includes unexpanded perlite, such as, for example, crude perlite ore. Perlite ore is an amorphous volcanic glass that has a relatively high water content, and may typically be formed by the hydration of obsidian. It occurs naturally and has the unusual property of greatly expanding when heated sufficiently. Perlite ore may typically contain the following constituents: about 70% to about 75% silicon dioxide (SiO₂); about 11% to about 15% aluminum oxide (Al₂O₃); about 3% to about 5% sodium oxide (Na₂O); about 3% to about 6% potassium oxide (K₂O); about 0.5% to about 2% iron oxide (Fe₂O₃); about zero % to about 0.7% magnesium oxide (MgO); about 0.5% to about 1.5% calcium oxide (CaO); and about zero % to about 0.2% titanium oxide (TiO₂). According to some embodiments, the perlite ore may include crude unexpanded perlite fines or dust. The fines or dust may be obtained from, for example, perlite ore dust resulting from milling and/or classifying of unexpanded perlite ore. Prior to processing, perlite may be gray to green in color with abundant spherical cracks that cause it to break into small pearl-like masses.

"Particle size," as used herein, for example, in the context of particle size distribution (psd), is measured in terms of "equivalent spherical diameter" (esd). Sometimes referred to as the "dso" value, median particle size and other particle size properties referred to in the present application may be measured in a well-known manner, for example, by sedimentation of the particle material in a fully-dispersed condition in an aqueous medium using a SEDIGRAPH 5100^{®} machine, as supplied by Micromeritics Corporation. Such a machine may provide measurements and a plot of the cumulative percentage by weight of particles having a size (esd) less than the given esd value. The median particle size dso is the value that may be determined in this way of the particle esd at which there are 50% by weight of the particles that have an esd less than that dso value. Similarly, the top particle size d₉₀ is the value at which there are 90% by weight of the particles that have an esd less than that d₉₀ value. Particle size measurements may alternatively be performed using a MALVERN MASTERSIZER S^{®} machine, as supplied by Malvern Instruments Ltd., which uses a laser light scattering technique to measure the size of particles in powders, suspensions, and emulsions using the diffraction of a laser beam based on an application of Mie or Fraunhofer theory.

According to some embodiments, the unexpanded perlite has a median particle size (dso) of less than 12 microns. For example, the unexpanded perlite may have a median particle size (dso) of less than 11 microns, less than 10 microns less than 8 microns, less than 6 microns, less than 4 microns, or less than 2 microns.

According to some embodiments, the unexpanded perlite has a top particle size (d₉₀) of less than 30 microns. For example, the unexpanded perlite may have a top particle size (d₉₀) of less than less than 25 microns, less than 20 microns, or less than 15 microns.

Specific surface area may be calculated using the BET (Brunauer-Emmett-Teller) theory. The application of BET theory to a particular adsorbent component yields a measure of the material's specific surface area, known as "BET surface area." BET surface area may be measured by any appropriate measurement technique known to those skilled in the art. In some embodiments, BET surface area is measured with a Gemini III 2375 Surface Area Analyzer, using nitrogen as the sorbent gas, from Micromeritics Instrument Corporation (Norcross, Ga., USA). As used herein, "surface area" refers to BET surface area, unless otherwise indicated.

According to some embodiments, the unexpanded perlite may have a BET surface area of at least 1 m²/gram. For example, the unexpanded perlite may have a BET surface area of at least 2 m²/gram, such as, for example, at least 2.5 m²/gram, at least 3 m²/gram, at least 3.5 m²/gram, at least 4 m²/gram, at least 4.5 m²/gram, or 5 m²/gram.

According to some embodiments, the unexpanded perlite may have a bulk density of at least 400.5 kg/m³ (at least 25 lbs/ft³). For example, the unexpanded perlite may have a bulk density of at least 480.6 kg/m³ (at least 30 lbs/ft³), such as, for example, at least 544.6 kg/m³ (at least 34 lbs/ft³), at least 560.6 kg/m³ (at least 35 lbs/ft³), at least 640.7 kg/m³ (at least 40 lbs/ft³), at least 720.8 kg/m³ (at least 45 lbs/ft³), at least 800.9 kg/m³ (at least 50 lbs/ft³), at least 881.0 kg/m³ (at least 55 lbs/ft³), or at least 961.1 kg/m³ (at least 60 lbs/ft³).

According to some embodiments, the hydraulic cement may include Portland cement or any other similar hydraulic cement.

According to some embodiments, the hardened concrete may have a strength activity index of at least 150%. For example, the strength activity index may be at least 160%, such as, for example, at least 160%, at least 170%, at least 180%, at least 190%, at least 200%, at least 225%, or at least 250%, at least 300%, at least 350%, at least 400%, at least 450, or at least 500%.

According to some embodiments, the settable composition may have a slurry density of at least 1.20 kg/I (at least 10 lbs/gal). For example, the settable composition may have a slurry density of at least 1.26 kg/I (at least 10.5 lbs/gal), such as, for example, at least 1.32 kg/I (at least 11 lbs/gal), at least 1.38 kg/I (at least 11.5 lbs/gal), at least 1.44 kg/I (at least 12 lbs/gal), at least 1.50 kg/I (at least 12.5 lbs/gal), at least 1.56 kg/I (at least 13 lbs/gal), at least 1.62 kg/I (at least 13.5 lbs/gal), or at least 1.68 kg/I (at least 14 lbs/gal).

The cement composition includes at least 15% by weight natural glass (on a dry basis). For example, the cement composition may include at least 20% by weight natural glass, such as, for example, at least 25% by weight natural glass, at least 30% by weight natural glass, at least 35% by weight natural glass, at least 40% by weight natural glass, at least 45% by weight natural glass, or at least 50% by weight natural glass.

According to some embodiments, the cement composition may include at least 25% by weight fly ash. For example, the cement composition may include at least 30% by weight fly ash, such as, for example, at least 35% by weight fly ash, at least 40% by weight fly ash, at least 45% by weight fly ash, or at least 50% by weight fly ash.

According to some embodiments, the settable composition may include at least one of accelerators to reduce setting time, extenders to reduce density and/or hydraulic cement, weighting agents to increase density, fluid loss control agents to control water loss of the settable composition in the well bore, lost circulation control agents, dispersants, anti-foaming agents, and fibers. For example, the accelerators may include calcium chloride. According to some embodiments, the calcium chloride may include 5% or less by weight of the settable composition. According to some embodiments, the extenders may include at least one of the natural glass, clays including bentonite, diatomaceous earth, silica, gilsonite, and powdered coal. The weighting agents, fluid loss control agents, lost circulation control agents, dispersants, anti-foaming agents, and/or fibers may include any types known to those skilled in the art.

According to some embodiments, the natural glass may serve as at least one of a strength enhancer and a substitute for fly ash and/or other extenders. Without wishing to be bound by theory, it is believed that the natural glass (e.g., fine unexpanded perlite) may enhance the strength of the resulting well cement by acting as a natural pozzolan due to the favorable chemistry and morphology of the perlite particles. According to some embodiments, the natural glass (e.g., fine unexpanded perlite) may be used as a substitute for extenders such as, for example, fly ash because. This may be desirable when fly ash and/or other extenders are costly or in scarce supply.

The method for making well cement includes combining hydraulic cement and natural glass to form a cement composition, and adding water to at least a portion of the cement composition to form a settable composition. The method further includes allowing the settable composition to set to form hardened concrete, wherein the hardened concrete has a strength activity index of at least 125%.

In the method for making a well cement, the natural glass includes unexpanded perlite, such as, for example, crude perlite ore. According to some embodiments, the perlite ore may include crude unexpanded perlite fines or dust. The fines or dust may be obtained from, for example, perlite ore dust resulting from milling and/or classifying of unexpanded perlite ore.

According to some embodiments of the method for making a well cement, the unexpanded perlite has a median particle size (dso) of less than 12 microns. For example, the unexpanded perlite may have a median particle size (dso) of less than 11 microns, less than 10 microns, less than 8 microns, less than 6 microns, less than 4 microns, or less than 2 microns. According to one embodiment, the unexpanded perlite may have a median particle size (dso) ranging from about 4 microns to about 10 microns.

According to some embodiments of the method for making a well cement, the unexpanded perlite has a top particle size (d₉₀) of less than 30 microns. For example, the unexpanded perlite may have a top particle size (d₉₀) of less than 25 microns, less than 20 microns, or less than 15 microns.

According to some embodiments of the method for making a well cement, the unexpanded perlite may have a BET surface area of at least 1 m²/gram. For example, the unexpanded perlite may have a BET surface area of at least 2 m²/gram, such as, for example, at least 2.5 m²/gram, at least 3 m²/gram, at least 3.5 m²/gram, at least 4 m²/gram, at least 4.5 m²/gram, or 5 m²/gram.

According to some embodiments of the method for making a well cement, the unexpanded perlite may have a bulk density of at least 400.5 kg/m³ (at least 25 lbs/ft³). For example, the unexpanded perlite may have a bulk density of at least 480.6 kg/m³ (at least 30 lbs/ft³), such as, for example, at least 544.6 kg/m³ (at least 34 lbs/ft³), at least 560.6 kg/m³ (at least 35 lbs/ft³), at least 640.7 kg/m³ (at least 40 lbs/ft³), at least 720.8 kg/m³ (at least 45 lbs/ft³), at least 800.9 kg/m³ (at least 50 lbs/ft³), at least 881.0 kg/m³ (at least 55 lbs/ft³), or at least 961.1 kg/m³ (at least 60 lbs/ft³).

According to some embodiments of the method for making a well cement, the hydraulic cement may include Portland cement or any other similar hydraulic cement.

According to some embodiments of the method for making a well cement, the hardened concrete may have a strength activity index of at least 150%. For example, the strength activity index may be at least 160%, such as, for example, at least 160%, at least 170%, at least 180%, at least 190%, at least 200%, at least 225%, or at least 250%, at least 300%, at least 350%, at least 400%, at least 450, or at least 500%.

According to some embodiments of the method for making a well cement, the settable composition may have a slurry density of at least 1.20 kg/I (at least 10 lbs/gal). For example, the settable composition may have a slurry density of at least 1.26 kg/I (at least 10.5 lbs/gal), such as, for example, at least 1.32 kg/I (at least 11 lbs/gal), at least 1.38 kg/I (at least 11.5 lbs/gal), at least 1.44 kg/I (at least 12 lbs/gal), at least 1.50 kg/I (at least 12.5 lbs/gal), at least 1.56 kg/I (at least 13 lbs/gal), at least 1.62 kg/I (at least 13.5 lbs/gal), or at least 1.68 kg/I (at least 14 lbs/gal).

In the method for making a well cement, the cement composition includes at least 15% by weight natural glass. For example, the cement composition may include at least 20% by weight natural glass, such as, for example, at least 25% by weight natural glass, at least 30% by weight natural glass, at least 35% by weight natural glass, at least 40% by weight natural glass, at least 45% by weight natural glass, or at least 50% by weight natural glass.

According to some embodiments of the method for making a well cement, the cement composition may include at least 25% by weight fly ash. For example, the cement composition may include at least 30% by weight fly ash, such as, for example, at least 35% by weight fly ash, at least 40% by weight fly ash, at least 45% by weight fly ash, or at least 50% by weight fly ash.

According to some embodiments of the method for making a well cement, the settable composition may include at least one of accelerators to reduce setting time, extenders to reduce density and/or hydraulic cement, weighting agents to increase density, fluid loss control agents to control water loss of the settable composition in the well bore, lost circulation control agents, dispersants, anti-foaming agents, and fibers. For example, the accelerators may include calcium chloride. According to some embodiments, the calcium chloride may include 5% or less by weight of the settable composition. According to some embodiments, the extenders may include at least one of the natural glass, clays including bentonite, diatomaceous earth, silica, gilsonite, and powdered coal. The weighting agents, fluid loss control agents, lost circulation control agents, dispersants, anti-foaming agents, and/or fibers may include any types known to those skilled in the art.

The cement composition for use in well cementing includes hydraulic cement and natural glass. The natural glass has a median particle size (dso) of less than 12 microns and a top particle size (d₉₀) of less than 30 microns.

In the cement composition, the natural glass includes unexpanded perlite, such as, for example, crude perlite ore. According to some embodiments, the perlite ore may include crude unexpanded perlite fines or dust. The fines or dust may be obtained from, for example, perlite ore dust resulting from milling and/or classifying of unexpanded perlite ore.

According to some embodiments of the cement composition, the unexpanded perlite has a median particle size (dso) of less than 12 microns. For example, the unexpanded perlite may have a median particle size (d₅₀) of less than 11 microns, less than 10 microns, less than 8 microns, less than 6 microns, less than 4 microns, or less than 2 microns.

According to some embodiments of the cement composition, the unexpanded perlite has a top particle size (d₉₀) of less than 30 microns. For example, the unexpanded perlite may have a top particle size (d₉₀) of less than 25 microns, less than 20 microns, or less than 15 microns.

According to some embodiments of the cement composition, the unexpanded perlite may have a BET surface area of at least 1 m²/gram. For example, the unexpanded perlite may have a BET surface area of at least 2 m²/gram, such as, for example, at least 2.5 m²/gram, at least 3 m²/gram, at least 3.5 m²/gram, at least 4 m²/gram, at least 4.5 m²/gram, or 5 m²/gram.

According to some embodiments of the cement composition, the unexpanded perlite may have a bulk density of at least 400.5 kg/m³ (at least 25 lbs/ft³). For example, the unexpanded perlite may have a bulk density of at least 480.6 kg/m³ (at least 30 lbs/ft³), such as, for example, at least 544.6 kg/m³ (at least 34 lbs/ft³), at least 560.6 kg/m³ (at least 35 lbs/ft³), at least 640.7 kg/m³ (at least 40 lbs/ft³), at least 720.8 kg/m³ (at least 45 lbs/ft³), at least 800.9 kg/m³ (at least 50 lbs/ft³), at least 881.0 kg/m³ (at least 55 lbs/ft³), or at least 961.1 kg/m³ (at least 60 lbs/ft³).

According to some embodiments of the cement composition, the hydraulic cement may include Portland cement or any other similar hydraulic cement.

The cement composition includes at least 15% by weight natural glass. For example, the cement composition may include at least 20% by weight natural glass, such as, for example, at least 25% by weight natural glass, at least 30% by weight natural glass, at least 35% by weight natural glass, at least 40% by weight natural glass, at least 45% by weight natural glass, or at least 50% by weight natural glass.

According to some embodiments of the cement composition, the cement composition may include at least 25% by weight fly ash. For example, the cement composition may include at least 30% by weight fly ash, such as, for example, at least 35% by weight fly ash, at least 40% by weight fly ash, at least 45% by weight fly ash, or at least 50% by weight fly ash.

According to some embodiments of the cement composition, the cement composition may include at least one of accelerators to reduce setting time, extenders to reduce density and/or hydraulic cement, weighting agents to increase density, fluid loss control agents to control water loss of the settable composition in the well bore, lost circulation control agents, dispersants, anti-foaming agents, and fibers. For example, the accelerators may include calcium chloride. According to some embodiments, the calcium chloride may include 5% or less by weight of the settable composition. According to some embodiments, the extenders may include at least one of the natural glass, clays including bentonite, diatomaceous earth, silica, gilsonite, and powdered coal. The weighting agents, fluid loss control agents, lost circulation control agents, dispersants, anti-foaming agents, and/or fibers may include any types known to those skilled in the art.

According to some embodiments, a settable composition for use in well cementing may include a cement composition including hydraulic cement and natural glass, wherein the natural glass has a median particle size (d₅₀) of less than 12 microns and a top particle size (d₉₀) of less than 30 microns. The settable composition also includes water, and the settable composition is configured to set to form hardened concrete, wherein the hardened concrete has a strength activity index of at least 125%.

For the settable composition, the natural glass includes unexpanded perlite, such as, for example, crude perlite ore. According to some embodiments, the perlite ore may include crude unexpanded perlite fines or dust. The fines or dust may be obtained from, for example, perlite ore dust resulting from milling and/or classifying of unexpanded perlite ore.

According to some embodiments of the settable composition, the unexpanded perlite has a median particle size (d₅₀) of less than 12 microns. For example, the unexpanded perlite may have a median particle size (d₅₀) of less than 11 microns, less than 10 microns, less than 8 microns, less than 6 microns, less than 4 microns, or less than 2 microns.

According to some embodiments of the settable composition, the unexpanded perlite has a top particle size (d₉₀) of less than 30 microns. For example, the unexpanded perlite may have a top particle size (d₉₀) of less than 25 microns, less than 20 microns, or less than 15 microns.

According to some embodiments of the settable composition, the unexpanded perlite may have a BET surface area of at least 1 m²/gram. For example, the unexpanded perlite may have a BET surface area of at least 2 m²/gram, such as, for example, at least 2.5 m²/gram, at least 3 m²/gram, at least 3.5 m²/gram, at least 4 m²/gram, at least 4.5 m²/gram, or 5 m²/gram.

According to some embodiments of the settable composition, the unexpanded perlite may have a bulk density of at least 400.5 kg/m³ (at least 25 lbs/ft³). For example, the unexpanded perlite may have a bulk density of at least 480.6 kg/m³ (at least 30 lbs/ft³), such as, for example, at least 544.6 kg/m³ (at least 34 lbs/ft³), at least 560.6 kg/m³ (at least 35 lbs/ft³), at least 640.7 kg/m³ (at least 40 lbs/ft³), at least 720.8 kg/m³ (at least 45 lbs/ft³), at least 800.9 kg/m³ (at least 50 lbs/ft³), at least 881.0 kg/m³ (at least 55 lbs/ft³), or at least 961.1 kg/m³ (at least 60 lbs/ft³).

According to some embodiments of the settable composition, the hydraulic cement may include Portland cement or any other similar hydraulic cement.

According to some embodiments of the settable composition, the hardened concrete may have a strength activity index of at least 150%. For example, the strength activity index may be at least 160%, such as, for example, at least 160%, at least 170%, at least 180%, at least 190%, at least 200%, at least 225%, or at least 250%, at least 300%, at least 350%, at least 400%, at least 450, or at least 500%.

According to some embodiments of the settable composition, the settable composition may have a slurry density of at least 1.20 kg/I (at least 10 lbs/gal). For example, the settable composition may have a slurry density of at least 1.26 kg/I (at least 10.5 lbs/gal), such as, for example, at least 1.32 kg/I (at least 11 lbs/gal), at least 1.38 kg/I (at least 11.5 lbs/gal), at least 1.44 kg/I (at least 12 lbs/gal), at least 1.50 kg/I (at least 12.5 lbs/gal), at least 1.56 kg/I (at least 13 lb/gal), at least 1.62 kg/I (at least 13.5 lbs/gal), or at least 1.68 kg/I (at least 14 lbs/gal).

In the settable composition, the cement composition includes at least 15% by weight natural glass. For example, the cement composition may include at least 20% by weight natural glass, such as, for example, at least 25% by weight natural glass, at least 30% by weight natural glass, at least 35% by weight natural glass, at least 40% by weight natural glass, at least 45% by weight natural glass, or at least 50% by weight natural glass.

According to some embodiments of the settable composition, the cement composition may include at least 25% by weight fly ash. For example, the cement composition may include at least 30% by weight fly ash, such as, for example, at least 35% by weight fly ash, at least 40% by weight fly ash, at least 45% by weight fly ash, or at least 50% by weight fly ash.

According to some embodiments of the settable composition, the settable composition may include at least one of accelerators to reduce setting time, extenders to reduce density and/or hydraulic cement, weighting agents to increase density, fluid loss control agents to control water loss of the settable composition in the well bore, lost circulation control agents, dispersants, anti-foaming agents, and fibers. For example, the accelerators may include calcium chloride. According to some embodiments, the calcium chloride may include 5% or less by weight of the settable composition. According to some embodiments, the extenders may include at least one of the natural glass, clays including bentonite, diatomaceous earth, silica, gilsonite, and powdered coal. The weighting agents, fluid loss control agents, lost circulation control agents, dispersants, anti-foaming agents, and/or fibers may include any types known to those skilled in the art.

The hardened concrete for use in well cementing includes a cement composition including hydraulic cement and natural glass, wherein the natural glass has a median particle size (d₅₀) of less than 12 microns and a top particle size (d₉₀) of less than 30 microns. The hardened concrete has a strength activity index of 125%.

In the hardened concrete, the natural glass includes unexpanded perlite, such as, for example, crude perlite ore. According to some embodiments, the perlite ore may include crude unexpanded perlite fines or dust. The fines or dust may be obtained from, for example, perlite ore dust resulting from milling and/or classifying of unexpanded perlite ore.

In the hardened concrete, the unexpanded perlite has a median particle size (d₅₀) of less than 12 microns. For example, the unexpanded perlite may have a median particle size (d₅₀) of less than 11 microns, less than 10 microns, less than 8 microns, less than 6 microns, less than 4 microns, or less than 2 microns.

In the hardened concrete, the unexpanded perlite has a top particle size (d₉₀) of less than 30 microns. For example, the unexpanded perlite may have a top particle size (d₉₀) of less than 25 microns, less than 20 microns, or less than 15 microns.

According to some embodiments of the hardened concrete, the unexpanded perlite may have a BET surface area of at least 1 m²/gram. For example, the unexpanded perlite may have a BET surface area of at least 2 m²/gram, such as, for example, at least 2.5 m²/gram, at least 3 m²/gram, at least 3.5 m²/gram, at least 4 m²/gram, at least 4.5 m²/gram, or 5 m²/gram.

According to some embodiments of the hardened concrete, the unexpanded perlite may have a bulk density of at least 400.5 kg/m³ (at least 25 lbs/ft³). For example, the unexpanded perlite may have a bulk density of at least 480.6 kg/m³ (at least 30 lbs/ft³), such as, for example, at least 544.6 kg/m³ (at least 34 lbs/ft³), at least 560.6 kg/m³ (at least 35 lbs/ft³), at least 640.7 kg/m³ (at least 40 lbs/ft³), at least 720.8 kg/m³ (at least 45 lbs/ft³), at least 800.9 kg/m³ (at least 50 lbs/ft³), at least 881.0 kg/m³ (at least 55 lbs/ft³), or at least 961.1 kg/m³ (at least 60 lbs/ft³).

According to some embodiments of the hardened concrete, the hydraulic cement may include Portland cement or any other similar hydraulic cement.

According to some embodiments of the hardened concrete, the hardened concrete may have a strength activity index of at least 150%. For example, the strength activity index may be at least 160%, such as, for example, at least 160%, at least 170%, at least 180%, at least 190%, at least 200%, at least 225%, or at least 250%, at least 300%, at least 350%, at least 400%, at least 450, or at least 500%.

According to some embodiments of the hardened concrete, the hardened concrete may be formed from a settable composition having a slurry density of at least 1.20 kg/I (at least 10 lbs/gal). For example, the settable composition may have a slurry density of at least 1.26 kg/I (at least 10.5 lbs/gal), such as, for example, at least 1.32 kg/I (at least 11 lbs/gal), at least 1.38 kg/I (at least 11.5 lbs/gal), at least 1.44 kg/I (at least 12 lbs/gal), at least 1.50 kg/I (at least 12.5 lbs/gal), at least 1.56 kg/I (at least 13 lbs/gal), at least 1.62 kg/I (at least 13.5 lbs/gal), or at least 1.68 kg/I (at least 14 lbs/gal).

In the hardened concrete, the cement composition includes at least 15% by weight natural glass. For example, the cement composition may include at least 20% by weight natural glass, such as, for example, at least 25% by weight natural glass, at least 30% by weight natural glass, at least 35% by weight natural glass, at least 40% by weight natural glass, at least 45% by weight natural glass, or at least 50% by weight natural glass.

According to some embodiments of the hardened concrete, the cement composition may include at least 25% by weight fly ash. For example, the cement composition may include at least 30% by weight fly ash, such as, for example, at least 35% by weight fly ash, at least 40% by weight fly ash, at least 45% by weight fly ash, or at least 50% by weight fly ash.

According to some embodiments of the hardened concrete, the settable composition may include at least one of accelerators to reduce setting time, extenders to reduce density and/or hydraulic cement, weighting agents to increase density, fluid loss control agents to control water loss of the settable composition in the well bore, lost circulation control agents, dispersants, anti-foaming agents, and fibers. For example, the accelerators may include calcium chloride. According to some embodiments, the calcium chloride may include 5% or less by weight of the settable composition. According to some embodiments, the extenders may include at least one of the natural glass, clays including bentonite, diatomaceous earth, silica, gilsonite, and powdered coal. The weighting agents, fluid loss control agents, lost circulation control agents, dispersants, anti-foaming agents, and/or fibers may include any types known to those skilled in the art.

### Examples

Three exemplary natural glass samples were prepared and incorporated into cement compositions, and tested for compression strength of the resulting concrete after setting for twelve hours and twenty-four hours relative to a control cement composition including hydraulic cement and an example calcium carbonate. Sample 1 is of the invention. The testing was performed as noted herein according to modified procedures set forth in ASTM 311/311M-13. The test samples including natural glass included unexpanded perlite having the characteristics noted below in Tables 1 and 2. (The median particle size (d₅₀) of each natural glass sample was tested twice.)

**Table 1**

| **Sample** | | Calculated * 62.42 | | **Malvern** | | |
|---|---|---|---|---|---|---|
| | **Bulk Density g/cc** | **Bulk Density (kg/m³) (lb/ft³)** | **BET, m2/g** | **d50, µm** | **d50, µm** | **d90, µm** |
| 1** | 0.55 | 544.628 (34.331) | 4.9 | 10.64 | 9.99 | 28.82 |
| 2 | 0.99 | 989.8737 (61.7958) | 0.59 | 67.85 | 71.57 | 171.88 |
| 3 | 1.05 | 1049.866 (65.541) | 0.40 | 133.99 | 144.44 | 314.32 |
| Fly ash Class C | 1.2 | 1199.846 (74.904) | | 10.31 | | |
| Calcium Carbonate | | 1041.2 (65) - from TDS | | 24 | | |

| | | | | | | |
|---|---|---|---|---|---|---|
| ** (of the invention) | | | | | | |

**Table 2**

| **Sample** | **Fe₂O₃** | **MgO** | **Al₂O₃** | **SiO2** | **TiO₂** | **CaO** | **Na₂O** | **K₂O** | **P₂O₅** | **SO₃** | **MnO** | **Cl** | **LOI** |
|---|---|---|---|---|---|---|---|---|---|---|---|---|---|
| | (*%*) | (*%*) | (*%*) | (*%*) | (*%*) | (*%*) | (*%*) | (*%*) | (*%*) | (*%*) | (*%*) | (*%*) | (*%*) |
| 3 | 0.58 | 0 | 13.1 | 73.1 | 0.08 | 0.68 | 4.27 | 4.43 | 0 | 0 | 0.10 | 0.07 | 3.58 |
| 2 | 0.73 | 0.12 | 13.1 | 72.2 | 0.08 | 0.70 | 3.15 | 5.11 | 0 | 0 | 0.12 | 0.07 | 4.60 |
| 1 | 0.61 | 0 | 12.8 | 73.3 | 0.07 | 0.68 | 4.14 | 4.56 | 0 | 0 | 0.09 | 0.07 | 3.65 |

Table 3 below shows the testing results for hardened concrete formed by the control sample and six combinations of the three sample natural glasses. The test results show compression strength (CS) in MPa (pounds per square inch (psi)) after both twelve hours of setting time (12 hrs) and twenty-four hours of setting time (24 hrs). A modified strength activity index (SAI) (i.e., the difference in compression strength after setting for twenty-four hours between the sample and the control, divided by the compression strength of the control, all of which multiplied by 100%) was calculated for each of the non-control samples. For the seven tested concretes, the slurry density was 1.65 kg/I (13.8 lb/gal) and at 82.2 °C (180 degrees Fahrenheit).

**Table 3**

| **Concrete** | **Slurry Density 1.65 kg/I @ 82.2 °C (13.8 LB/GAL @ 180 degF)** | **Ratio** | **CS 12 hrs (MPa) (psi)** | **CS 24 hrs (MPa) (psi)** | **SAI** |
|---|---|---|---|---|---|
| 1 | Cement + CaCO3 | 50:50 | 2.17 (315) | 3.20 (465) | Control |
| 2 | Cement + Fly ash | 50:50 | 5.99 (869) | 10.79 (1566) | 237% |
| 3 | Cement + Sample 1 above | 50:50 | 14.59 (2117) | 16.18 (2347) | 405% |
| 4 | Cement + Fly ash + Sample 1 above | 50:25:25 | 9.41 (1365) | 12.67 (1839) | 295% |
| 5 | Cement+ CaCO3 + Sample 1 | 50:35:15 | 3.28 (476) | 8.68 (1260) | 171% |
| 6 | Cement + Sample 2 | 50:50 | 4.24 (616) | 10.28 (1492) | 221% |
| 7 | Cement + Sample 3 | 50:50 | 4.77 (692) | 8.48 (1231) | 165% |

As can be seen from the test results, the concrete including the natural glass Sample 1 (concrete Samples 3-5) showed the most improvement in strength activity index, and further, a greater percentage of natural glass of Sample 1 in the concrete composition resulted in a greater improvement in strength activity index. In addition, the strength was improved at both twelve and twenty-four hour set times.

Other embodiments will be apparent to those skilled in the art from consideration of the specification and practice of the embodiments disclosed herein. It is intended that the specification and examples be considered as exemplary only.

## Claims

1. A cement composition for use in well cementing, the cement composition comprising:
hydraulic cement; and at least 15% by weight natural glass,
wherein the natural glass includes unexpanded perlite and has a median particle size d₅₀ of less than 12 µm (microns) and a top particle size d₉₀ of less than 30 µm (microns),
wherein the median particle size d₅₀ and the top particle size d₉₀ are measured in accordance with the description.

2. A settable composition for use in well cementing, the settable composition comprising:
the cement composition of claim 1; and water,
wherein the settable composition is configured to set to form hardened concrete,
wherein the hardened concrete has a strength activity index ASTM C311/C311M-13 of at least 125%, or at least 150%.

3. A hardened concrete for use in well cementing, the hardened concrete comprising: the cement composition of claim 1, wherein the hardened concrete has a strength activity index ASTM C311/C311M-13 of at least 125%, or at least 150%.

4. A method for well cementing, the method comprising:
supplying a settable composition comprising a cement composition and water into a well bore; and allowing the settable composition to set to form hardened concrete,
wherein the cement composition comprises a hydraulic cement and at least 15% by weight natural glass, and wherein the natural glass comprises unexpanded perlite and
has a median particle size d₅₀ of less than 12 µm (microns), or less than 11 µm (microns) and a top particle size d₉₀ of less than 30 µm (microns), wherein the median particle size d₅₀ and the top particle size d₉₀ are measured in accordance with the description, and
wherein the hardened concrete has a strength activity index ASTM C311/C311M-13 of at least 125%.

5. The method of claim 4, wherein the unexpanded perlite has a BET surface area of at least 1 m²/gram, or at least 2.5 m²/gram, or at least 4 m²/gram.

6. The method of claim 4, wherein the unexpanded perlite has a bulk density of at least 400.5 kg/m³ (25 lbs/ft³), or at least 480.6 kg/m³ (30 lbs/ft³), or at least 544.6 kg/m³ (34 lbs/ft³).

7. The method of claim 4, wherein the unexpanded perlite comprises crude unexpanded perlite fines.

8. The method of claim 4, wherein the settable composition has a slurry density of at least 1.20 kg/I (10 lb/gal), or at least 1.44 kg/I (12 lb/gal), or at least 1.62 kg/I (13.5 lb/gal).

9. The method of claim 4, wherein the cement composition comprises at least 20% by weight natural glass, or at least 25% by weight natural glass, or at least 50% by weight natural glass.

10. The method of claim 4, wherein the cement composition comprises at least 25% by weight fly ash.

## Patentansprüche

1. Zementzusammensetzung zur Verwendung beim Bohrlochzementieren, die Zementzusammensetzung umfassend:
hydraulischen Zement; und mindestens 15 Gewichtsprozent natürliches Glas,
wobei das natürliche Glas nicht expandierten Perlit beinhaltet und eine mittlere Teilchengröße d₅₀ von weniger als 12 µm (Mikrometer) und eine obere Teilchengröße d₉₀ von weniger als 30 µm (Mikrometer) aufweist, wobei die mittlere Teilchengröße d₅₀ und die obere Teilchengröße d₉₀ gemäß der Beschreibung gemessen werden.

2. Aushärtbare Zusammensetzung zur Verwendung beim Bohrlochzementieren, die aushärtbare Zusammensetzung umfassend:
die Zementzusammensetzung gemäß Anspruch 1; und Wasser,
wobei die aushärtbare Zusammensetzung konfiguriert ist, um auszuhärten, um gehärteten Beton zu bilden,
wobei der gehärtete Beton einen Festigkeitsaktivitätsindex ASTM C311/C311M-13 von mindestens 125 % oder mindestens 150 % aufweist.

3. Gehärteter Beton zur Verwendung beim Bohrlochzementieren, der gehärtete Beton umfassend:
die Zementzusammensetzung gemäß Anspruch 1, wobei der gehärtete Beton einen Festigkeitsaktivitätsindex ASTM C311/C311M-13 von mindestens 125 % oder mindestens 150 % aufweist.

4. Verfahren zum Bohrlochzementieren, das Verfahren umfassend:
Zuführen einer aushärtbaren Zusammensetzung, umfassend eine Zementzusammensetzung und Wasser, in ein Bohrloch; und Aushärtenlassen der aushärtbaren Zusammensetzung, um gehärteten Beton zu bilden,
wobei die Zementzusammensetzung einen hydraulischen Zement und mindestens 15 Gewichtsprozent natürliches Glas umfasst, und wobei das natürliche Glas nicht expandierten Perlit umfasst und eine mittlere Teilchengröße d₅₀ von weniger als 12 µm (Mikrometer) oder weniger als 11 µm (Mikrometer) und eine obere Teilchengröße d₉₀ von weniger als 30 µm (Mikrometer) aufweist,
wobei die mittlere Teilchengröße d₅₀ und die obere Teilchengröße d₉₀ gemäß der Beschreibung gemessen werden, und wobei der Festbeton einen Festigkeitsaktivitätsindex ASTM C311/C311M-13 von mindestens 125 % aufweist.

5. Verfahren gemäß Anspruch 4, wobei der nicht expandierte Perlit eine BET-Oberfläche von mindestens 1 m²/Gramm oder mindestens 2,5 m²/Gramm oder mindestens 4 m²/Gramm aufweist.

6. Verfahren gemäß Anspruch 4, wobei der nicht expandierte Perlit eine Schüttdichte von mindestens 400,5 kg/m³ (25 lbs/ft³) oder mindestens 480,6 kg/m³ (30 lbs/ft³) oder mindestens 544,6 kg/m³ (34 lbs/ft³) aufweist.

7. Verfahren gemäß Anspruch 4, wobei der nicht expandierte Perlit rohen, nicht expandierten Perlit-Feinanteil umfasst.

8. Verfahren gemäß Anspruch 4, wobei die härtbare Zusammensetzung eine Aufschlämmungsdichte von mindestens 1,20 kg/l (10 lb/gal) oder mindestens 1,44 kg/l (12 lb/gal) oder mindestens 1,62 kg/l (13,5 lb/gal) aufweist.

9. Verfahren gemäß Anspruch 4, wobei die Zementzusammensetzung mindestens 20 Gewichtsprozent Naturglas oder mindestens 25 Gewichtsprozent Naturglas oder mindestens 50 Gewichtsprozent Naturglas umfasst.

10. Verfahren gemäß Anspruch 4, wobei die Zementzusammensetzung mindestens 25 Gewichtsprozent Flugasche umfasst.

## Revendications

1. Une composition de ciment destinée à être utilisée dans la cimentation de puits, la composition de ciment comprenant :
du ciment hydraulique ; et au moins 15 % en poids de verre naturel,
dans laquelle le verre naturel comprend de la perlite non expansée et a une granulométrie médiane d₅₀ inférieure à 12 µm (microns) et une granulométrie supérieure d₉₀ inférieure à 30 µm (microns), dans laquelle la granulométrie médiane d₅₀ et la granulométrie supérieure d₉₀ sont mesurées conformément à la description.

2. Une composition durcissable destinée à être utilisée dans la cimentation de puits, la composition durcissable comprenant :
la composition de ciment selon la revendication 1 ; et de l'eau,
dans laquelle la composition durcissable est configurée pour prendre pour former du béton durci,
dans lequel le béton durci a un indice d'activité de résistance ASTM C311/C311M-13 d'au moins 125 %, ou au moins 150 %.

3. Un béton durci destiné à être utilisé dans la cimentation de puits, le béton durci comprenant :
la composition de ciment selon la revendication 1, dans laquelle le béton durci a un indice d'activité de résistance ASTM C311/C311M-13 d'au moins 125 %, ou au moins 150 %.

4. Un procédé de cimentation de puits, le procédé comprenant :
l'introduction d'une composition durcissable comprenant une composition de ciment et de l'eau dans un puits de forage ; et laisser la composition durcissable prendre pour former du béton durci,
dans lequel la composition de ciment comprend un ciment hydraulique et au moins 15 % en poids de verre naturel, et dans lequel le verre naturel comprend de la perlite non expansée et a une granulométrie médiane d₅₀ inférieure à 12 µm (microns), ou inférieure à 11 µm (microns) et une granulométrie supérieure d₉₀ inférieure à 30 µm (microns), dans lequel la granulométrie médiane d₅₀ et la granulométrie supérieure d₉₀ sont mesurées conformément à la description, et dans lequel le béton durci a un indice d'activité de résistance ASTM C311/C311M-13 d'au moins 125 %.

5. Le procédé selon la revendication 4, dans lequel la perlite non expansée a une surface BET d'au moins 1 m²/gramme, ou au moins 2,5 m²/gramme, ou au moins 4 m²/gramme.

6. Le procédé selon la revendication 4, dans lequel la perlite non expansée a une densité apparente d'au moins 400,5 kg/m³ (25 lb/pi³), ou au moins 480,6 kg/m³ (30 lb/pi³), ou au moins 544,6 kg/m³ (34 lb/pi³).

7. Le procédé selon la revendication 4, dans lequel la perlite non expansée comprend des fines de perlite brute non expansée.

8. Le procédé selon la revendication 4, dans lequel la composition durcissable a une densité de suspension d'au moins 1,20 kg/l (10 lb/gal), ou au moins 1,44 kg/l (12 lb/gal), ou au moins 1,62 kg/l (13,5 lb/gal).

9. Le procédé selon la revendication 4, dans lequel la composition de ciment comprend au moins 20 % en poids de verre naturel, ou au moins 25 % en poids de verre naturel, ou au moins 50 % en poids de verre naturel.

10. Le procédé selon la revendication 4, dans lequel la composition de ciment comprend au moins 25 % en poids de cendres volantes.
